# EUROPEAN PATENT APPLICATION

(11) **EP 1 622 218 A1**
(43) Date of publication of application: **01.02.2006**
(21) Application number: 05015125.7
(22) Date of filing: 12.07.2005
(51) Int. Cl.: H01M 8/04, H01M 8/10, H01M 4/88

(54) **Method for supporting catalyst for polymer electrolyte fuel cell and membrane electrode assembly**

(30) Priority: 27.07.2004 JP 2004218780
(71) Applicant: AISIN SEIKI KABUSHIKI KAISHA, Kariya-shi, Aichi-ken 448-8650 (JP)
(72) Inventor: Ogura, Yoshikazu, Kariya Aichi, 448-8605 (JP)
(74) Representative: TBK-Patent

(57) **Abstract**

A method for supporting a catalyst for a polymer electrolyte fuel cell is characterized in that the method for supporting a catalyst includes the steps of making a catalyst layer (12, 14) including a catalyst precursor, the catalyst layer to be used as either an anode catalyst layer (12) or a cathode catalyst layer (14), arranging the catalyst layer with a polymer electrolytic membrane (13) having proton conductivity in a thickness direction, and performing an electrochemical reductive reaction for reducing the catalyst precursor included in the catalyst layer to produce a catalyst and concomitantly developing a catalyst particle layer (13k) having a plurality of catalyst microparticles in the polymer electrolytic membrane.

## Description

### FIELD OF THE INVENTION

This invention generally relates to a method for supporting a catalyst for a polymer electrolyte fuel cell, and a membrane electrode assembly.

### BACKGROUND

Conventionally, in a polymer electrolyte fuel cell, hydrogen, methanol, or hydrocarbon or the like as a fuel is electrochemically oxidized, and oxygen, air or the like is reduced. Then, chemical energy is directly converted into electric energy through oxidative and reductive reactions described above. Acoordingly, unlike an electric generation utilizing fossil fuels, environmentally-destructive substances such as NOₓ, SOₓ are not produced. Therefore, the polymer electrolyte fuel cell is attracting increasing attention as a source of clean electric energy. The fuel cell is configured from, for example, five layers including an anode gas diffusion layer, an anode catalyst layer, a polymer electrolytic membrane having proton conductivity, a cathode catalyst layer, and a cathode gas diffusion layer. For a catalyst included in electrodes for the fuel cell, in other words, an anode electrode and a cathode electrode, carbon-supported platinum (platinum alloy) is utilized. In the carbon-supported platinum, platinum or platinum alloy of a several nanometer size is supported by an electrically conductive carbon base. The carbon-supported platinum has been developed for a practical use. In the configuration of the fuel cell described above, electrically conductive material such as carbon black is generally used as a base of the catalyst. The carbon-supported catalyst having high concentration of the catalyst dispersed on the base is mixed with a polymer electrolytic solution having ionic conductivity (In addition of that, solvent such as water, alcohol or the like and water-repellent agent such as tetrafluoroethylene are added in some cases). Then, the mixture is applied onto a gas diffusion layer or a polymer electrolytic membrane having proton conductivity by means of a roll coating method, a spraying method, or a doctor blade method, and dried. Thus, a catalyst paste is formed.

After that, the anode gas diffusion layer, the anode catalyst layer, the polymer electrolytic membrane, the cathode catalyst layer, and the cathode gas diffusion layer are generally arranged in the above-described order, and hot-pressed. However, according to a membrane electrode assembly (referred as MEA later) manufactured by above-described method, in the case of hydrogen-air fuel cell, part of gases which had not contributed to electricity-generating reaction (hydrogen at the anode, oxygen at the cathode) tends to pass through the polymer electrolytic membrane to an opposite electrode in the process of generating electricity of the fuel cell, so called "crossover". The cross over causes generations of chemical short and localized fuel cell, which arises major problems of degradation of cell performance and damages of the MEA in regards of reliability and durability. Here, "crossover" means that a fuel or an oxidant gas passes through the polymer electrolytic membrane to the opposite electrode.

JP2003-59511A and JPH7-90111 describe a method for manufacturing a membrane electrode assembly (MEA), designed for overcoming the problems described above, having a polymer electrolytic membrane and electrodes provided both sides of the polymer electrolytic membrane. Here, microparticles, which support metal, is located at a center portion of the polymer electrolytic membrane. According to the technique, because the microparticles, which support a catalyst (carbon-supported platinum), is located at the center portion of the polymer electrolytic membrane, gases (hydrogen, oxygen) passing through the polymer electrolytic membrane (crossover) can be made react by the catalyst located at the center portion of the polymer electrolytic membrane into water. As a result, the level of crossover can decrease. The water produced can be utilized for adding moisture to the polymer electrolytic membrane. The document suggests that a MEA of high performance, in which the advantage of the moisture addition scheme described above is utilized, can be manufactured.

However, according to a method described in JP2003-59511A, for forming a catalyst particle layer, in which the catalyst is supported, at the center portion of the polymer electrolytic membrane, a first polymer electrolytic membrane and a second polymer electrolytic membrane are arranged so as to sandwich the catalyst particle layer, and the layers are thermally bonded together. A membrane electrode assembly is formed from the polymer electrolytic membrane. An anode catalyst layer is arranged onto one side of the membrane electrode assembly obtained as described above in a thickness direction. A cathode catalyst layer is arranged onto the other side of the membrane electrode assembly in a thickness direction. Finally, an anode gas diffusion layer and a cathode gas diffusion layer are arranged onto the layers, and the layers are thermally bonded. The method described above originally has problems as follows.

For providing the catalyst particle layer at the center of the polymer electrolytic membrane, two polymer electrolytic membranes are required. Then, the first polymer electrolytic membrane and the second polymer electrolytic membrane are arranged to physically sandwich the catalyst particle layer, and the two electrolytic membranes are thermally bonded together. In this case, even though the catalyst particle layer containing a binder is utilized, level of bonding property originally has some limitation. As a result, bonded surfaces tends to be detached from another when the electrolytic membrane contracts. Accordingly, there exists some limitation for improving a fuel cell performance.

Because the first electrolytic membrane and the second electrolytic membrane are bonded together, a thickness of the polymer electrolytic membrane tend to be thicker. In this case, a membrane resistance of the polymer electrolytic membrane becomes higher, which tends to degrade performance of the fuel cell. If a thickness of the electrolytic membrane is made extremely thin, the electrolytic membrane becomes difficult to handle.

In the process of manufacturing the MEA, because the two electrolytic membranes are arranged to physically sandwich the catalyst particle layer, and the layers are thermally bonded, the number of processes of a thermal bonding tends to increase, which tends to increase a level of damage to the membrane.

A need thus exists for a method for supporting a catalyst for a polymer electrolyte fuel cell and for a membrane electrode assembly, in which a crossover of gases can be decreased, and a performance and a durability of the membrane electrode assembly (MEA) are thereby improved. The present invention has been made in view of the above circumstances and provides such a method for supporting a catalyst for a polymer electrolytic membrane, and such a membrane electrode assembly.

### SUMMARY OF THE INVENTION

According to an aspect of the present invention, a method for supporting a catalyst for a polymer electrolyte fuel cell is characterized in that the method for supporting a catalyst includes the steps of making a catalyst layer (12, 14) including a catalyst precursor, the catalyst layer to be used as either an anode catalyst layer (12) or a cathode catalyst layer (14), arranging the catalyst layer with a polymer electrolytic membrane (13) having proton conductivity in a thickness direction, and performing an electrochemical reductive reaction for reducing the catalyst precursor included in the catalyst layer to produce a catalyst and concomitantly developing a catalyst particle layer (13k) having a plurality of catalyst microparticles in the polymer electrolytic membrane.

According to a further aspect of the present invention, a method for supporting a catalyst for a polymer electrolyte fuel cell is characterized in that the method for supporting a catalyst includes the steps of arranging an anode gas diffusion layer (10), an anode catalyst layer (12), a polymer electrolytic membrane (13) having proton conductivity, a cathode catalyst layer (14), and a cathode gas diffusion layer (15) in a thickness direction in an order described above to make a membrane electrode assembly (1), one of the anode catalyst layer and the cathode catalyst layer including a catalyst, the other of the anode catalyst layer and the cathode catalyst layer including a catalyst precursor, and electrically connecting the anode catalyst layer and the cathode catalyst layer included in the membrane electrode assembly through an electrically conductive path (80), and performing an electrochemical reductive reaction for the other of the anode catalyst layer and the cathode catalyst layer for reducing the catalyst precursor included in the other of the anode catalyst layer and the cathode catalyst layer to produce the catalyst on the basis of electrons produced in an electrochemical oxidative reaction performed for the one of the anode catalyst layer and the cathode catalyst layer and concomitantly developing a catalyst particle layer (13k) having a plurality of catalyst microparticles in the polymer electrolytic membrane.

According to a further aspect of the present invention, a membrane electrode assembly formed by arranging an anode gas diffusion layer, an anode catalyst layer, a polymer electrolyte membrane, a cathode catalyst layer, and a cathode gas diffusion layer in a thickness direction in an order described above is characterized in that the anode catalyst layer and the cathode catalyst layer include a catalyst, and the polymer electrolyte membrane includes a catalyst particle layer including groups of catalyst microparticles.

According to a further aspect of the present invention, the catalyst particle layer developed in the polymer electrolytic membrane described above can reduce a crossover of gases. Accordingly, a method for supporting a catalyst for a polymer electrolyte fuel cell, and a membrane electrode assembly, in which performance and durability of the membrane electrode assembly is largely improved, can be provided.

### BRIEF DESCRIPTION OF THE DRAWINGS

The foregoing and additional features and characteristics of the present invention will become more apparent from the following detailed description considered with reference to the accompanying drawings, wherein:
Fig. 1 represents a schematic view illustrating a configuration of a MEA (membrane electrode assembly) configured to a fuel cell A according to a first example of the present invention;
Fig. 2 represents a schematic configurative view illustrating a condition that an anode of the fuel cell A is processed by an oxidative reaction, and a cathode is processed by a reductive reaction;
Fig. 3 represents a schematic view illustrating a configuration of a MEA configured to a fuel cell B according to a comparative example of the present invention;
Fig. 4 represents a graph illustrating an open end voltage of the fuel cell A according to the first example and that of the fuel cell B according to the comparative example;
Fig. 5 represents a graph illustrating a current-voltage property of the fuel cell A according to the first example and that of the fuel cell B according to the comparative example;
Fig. 6 represents a photographic diagram showing results of an EPMA (electron probe microanalysis) of a cross-section of the MEA of the fuel cell B according to the comparative example;
Fig. 7 represents a photographic diagram showing results of an EPMA of a cross-section of the MEA of the fuel cell A according to the first example of the present invention;
Fig. 8 represents a graph showing results of an EPMA performed along a line;
Fig. 9 represents a schematic configurative view illustrating a condition that a cathode of a fuel cell according to a second example is processed by an oxidative reaction, and an anode of the fuel cell is processed by a reductive reaction; and
Fig. 10 represents a diagram illustrating a schematic configurative view of a fuel cell stack according to a third example of the present invention.

### DETAILED DESCRIPTION

An embodiment of the present invention will be explained.

According to the embodiment of the present invention, a membrane electrode assembly includes an anode gas diffusion layer, an anode catalyst layer, a polymer electrolytic membrane, a cathode catalyst layer, and a cathode gas diffusion layer arranged in a thickness direction in an order described above. The anode catalyst layer and the cathode catalyst layer include a catalyst. The polymer electrolytic membrane includes a catalyst particle layer having groups of catalyst microparticles.

Next, a method for supporting a catalyst for a polymer electrolyte fuel cell according to the embodiment of the present invention will be explained. According to the method for supporting a catalyst, at first, an anode gas diffusion layer, an anode catalyst layer, a polymer electrolyte membrane having proton conductivity, a cathode catalyst layer, and a cathode gas diffusion layer are arranged in a thickness direction in an order described above. The anode catalyst layer and the anode gas diffusion layer are configured to an anode. The cathode catalyst layer and the cathode gas diffusion layer are configured to a cathode. Here, the anode catalyst layer (or the cathode catalyst layer, described later) includes a catalyst such as platinum. The cathode catalyst layer (or the anode catalyst layer, described later) includes a catalyst precursor. As the catalyst precursor included in the cathode catalyst layer, metallic salt including a catalyst can be exampled. More specifically, amine complex ion, chloride, nitrate or the like can be exampled. When platinum is selected from platinum group, amine complex ion such as [Pt(NH₃)₄]²⁺, [Pt(NH₃)₆]⁴⁺, [PtCl(NH₃)₅]³⁺ or the like can be employed. As the catalyst, element of the platinum group, more specifically, platinum, ruthenium, rhodium, iridium or the like, can be employed. In the anode catalyst layer, the catalyst can be supported by electrically conductive particles such as carbon particles. For example, carbon-supported catalyst, in which the catalyst is supported on surfaces of carbon particles, can be exampled.

Next, the anode catalyst layer and the cathode catalyst layer, configured to the membrane electrode assembly, are electrically connected through an electrically conductive path and a load A fuel gas distribution member having a flow channel is assembled with the membrane electrode assembly MEA at the anode gas diffusion layer side. An oxidant gas distribution member having a flow channel is assembled with the membrane electrode assembly MEA at the cathode gas diffusion layer side. Then, hydrogen (a hydrogen-containing gas) is supplied to the fuel gas distribution member (or the oxidant gas distribution member) to perform an electrochemical oxidative reaction for the anode catalyst layer. In this time, the hydrogen gas or the hydrogen-containing gas supplied to the anode catalyst layer is separated into protons (H⁺) and electrons (e⁻) through the oxidative reaction promoted by the catalyst supported by the anode catalyst layer.

The electrons produced in the process of the oxidative reaction are transferred from the anode catalyst layer through the electrically conductive path to the cathode catalyst layer. Then, an electrochemical reductive reaction is performed for the cathode catalyst layer on the basis of the electrons. Thus, the catalyst precursor included in the cathode catalyst layer is reduced to produce the catalyst of small size (several nanometer size). In this time, an inertia gas, a gas mainly containing an inertia gas, or air is supplied to the cathode catalyst layer. Generally, an inertia gas cannot be reduced. Then, because the electrons supplied to the cathode catalyst layer are not consumed to reduce the gas, the catalyst precursor can be efficiently reduced. As the inertia gas, nitrogen gas, argon gas or the like can be exampled. It was found through investigations that the catalyst precursor can be reduced at the cathode catalyst layer even when air, including substantial amount of nitrogen, is used instead of the inertia gas.

Simultaneous with the process of the electrochemical reductive reaction described above, the catalyst precursor included in the cathode catalyst layer transfers into the polymer electrolytic membrane by dispersion or ion-exchange action. Then, the transferred catalyst precursor is reduced. Accordingly, a catalyst particle layer including catalyst microparticles can be developed in the polymer electrolytic membrane. Here, the catalyst particle layer is developed in the polymer electrolytic membrane at the side of the cathode catalyst layer, at which the electrochemical reductive reaction has been performed. A relative thickness of the catalyst particle layer can be approximately 20 to 80, 25 to 70, 30 to 60 assuming that an average thickness of the polymer membrane is 100. However, sometimes an edge of the catalyst particle layer does not appear clearly. Although sometimes the edge of the catalyst particle layer does not appear clearly, it can be said that the catalyst particle layer has not a linear shape but a broad shape.

The catalyst particle layer developed in the polymer electrolytic membrane described above inhibits a crossover of gases. When a fuel gas (hydrogen) or an oxidant gas (oxygen) would pass through the polymer electrolytic membrane and transfer to the opposite electrode, the fuel gas is oxidized and the oxidant gas is reduced at the catalyst particle layer, and water is produced. From the fact described above, it can be assumed that the crossover of gases such as the fuel gas and the oxidant gas can be inhibited. As described above, the crossover of gases can be inhibited, which can largely improve performance and durability of the MEA.

Further, the polymer electrolytic membrane is not configured by means of bonding two polymer electrolytic membranes together. The polymer electrolytic membrane includes no bonded structure of two polymer electrolytic membranes in a thickness direction. In other words, the polymer electrolytic membrane has a single structure in a thickness direction. Therefore, not like the polymer electrolytic membrane configured by means of bonding two polymer electrolytic membranes, a defect that the two polymer electrolytic membranes would become separated from the boundary therebetween can be inhibited.

In addition, in the embodiment described above, the anode catalyst layer included the catalyst such as platinum, and the cathode catalyst layer included the catalyst precursor, but it is not limited. Inversely, the cathode catalyst layer can include the catalyst such as platinum, and the anode catalyst layer can include the catalyst precursor. In this case, hydrogen (a hydrogen-containing gas) is supplied to the gas distribution member of the cathode side to perform an electrochemical oxidative reaction for the cathode catalyst layer. Then, an electrochemical reductive reaction is performed for the anode catalyst layer on the basis of the electrons produced at the cathode catalyst layer. In this time, because an inertia gas, a gas mainly including an inertia gas, or air is supplied to the anode catalyst layer, the catalyst precursor can be efficiently reduced. Simultaneous with the electrochemical reductive reaction described above, the catalyst precursor included in the anode catalyst layer transfers into the polymer electrolytic membrane by dispersion or ion-exchange action. Then, the transferred catalyst precursor is reduced. Accordingly, a catalyst particle layer including catalyst microparticles can be developed in the polymer electrolytic membrane. Here, the catalyst particle layer is developed in the polymer electrolytic membrane at the side of the anode catalyst layer, at which the electrochemical reductive reaction has been performed.

In addition, the electrochemical reductive reaction can be performed for a fuel celt stack in which plural membrane electrode assemblies are assembled with a gas distribution member. In this case, because a step of performing the electrochemical reductive reaction can be performed for a whole fuel cell stack in which plural MEAs are assembled, productivity of the MEA can be increased.

In following, a first example according to the embodiment of the present invention will be explained accompanying with a first comparative example.

The first example is a method for supporting a catalyst of platinum through an electrochemical reductive reaction. For making an anode catalyst layer, carbon-supported platinum-ruthenium catalyst (manufactured by TANAKA KIKINZOKU KOGYO, TEC62E58) having platinum-ruthenium 57% by weight supported by electrically conductive carbon black (Ketjenblack EC) as a catalyst-supporting base was utilized. The carbon-supported platinum-ruthenium catalyst, 5g, purified water, 18g, alcohol dispersion of a polymer electrolyte (manufactured by Asahi Kasei Corporation, Aciplex SS-1100), 54g, and isopropyl alcohol, 6g, were mixed. The carbon-supported platinum-ruthenium catalyst was dispersed to have a second particle diameter of 0.5 µm to 1.0 µm. Thus, a catalyst paste was made. The catalyst paste was applied onto an ethylene tetrafluoroethylene film (ETFE film) (manufactured by Asahi Glass Company, Aflex) by means of an applicator to be a thin film of a uniform thickness. The applied catalyst paste was dried at a temperature of 80 °C. The dried catalyst paste was cut into pieces of the size of an electrode. Thus, the anode catalyst layer was made.

In addition, for making the cathode catalyst layer, Ketjenblack (manufactured by Ketjenblack International Corporation), 25g, diaminedinitroplatinum nitric acid solution as the catalyst precursor, 36g, alcohol dispersion of a polymer electrolyte (manufactured by Asahi Kasei, Aciplex SS-1100), 63g, and isopropyl alcohol, 5g, were mixed. The mixture was made paste-like. The paste was applied onto an ETFE film (manufactured by Asahi Glass Company, Aflex) by means of an applicator to be a thin film of a uniform thickness. The applied catalyst paste was dried at a temperature of 50°C. The dried catalyst paste was cut into pieces of the size of an electrode. Thus, the cathode catalyst layer was made.

A water-repellent gas diffusion material (manufactured by Toray Industries, Inc., Carbon Paper) was cut into pieces of an electrode size to make an anode gas diffusion layer and a cathode gas diffusion layer. The anode catalyst layer formed on the ETFE film and the cathode catalyst layer formed on another ETFE film were respectively applied onto one side and the other side of the polymer electrolytic membrane. Therefore, an order of the layers is; the anode catalyst layer, the polymer electrolytic membrane, and the cathode catalyst layer. The layers were hot-pressed (thermal bonding) at a temperature of 150 °C, under a surface pressure of 1 MPa (10 kgf/cm²), during a retention time of 1 minute to make the membrane electrode assembly (MEA). The polymer electrolytic membrane utilized was GORE-SELECT 30 manufactured by Japan Gore-Tex.

Further, the anode gas diffusion layer and the cathode gas diffusion layer were respectively applied onto one side and the other side of the membrane electrode assembly in a thickness direction. Then, the layers were hot-pressed (thermal bonding) at a temperature of 140 °C, under a surface pressure of 0.8 MPa (8kgf/cm²), during a retention time of 3 minutes.

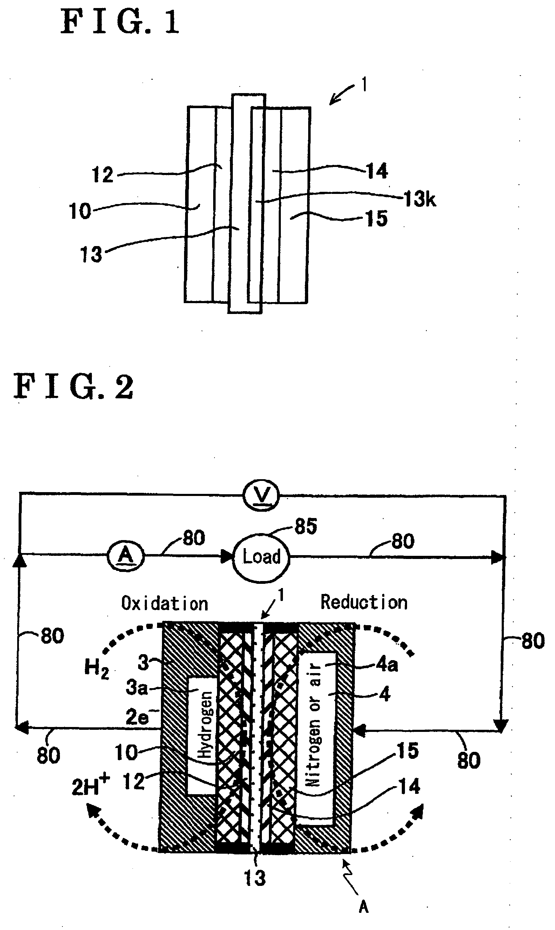

Fig. 1 represents a diagram illustrating the MEA 1 according to the first example. As illustrated in Fig. 1, the MEA 1 is formed by arranging the anode gas diffusion layer 10, the anode catalyst layer 12, the polymer electrolytic membrane 13, the cathode catalyst layer 14, and the cathode gas diffusion layer 15 in a thickness direction in an order described above. The polymer electrolytic membrane 13 did not include a plurality of polymer electrolytic membranes bonded in a thickness direction. In other words, the polymer electrolytic membrane 13 was configured from one sheet of polymer electrolytic membrane. According to the MEA 1 of the first example, the anode catalyst layer 12 includes the catalyst (platinum-ruthenium), and the cathode catalyst layer 14 includes the catalyst precursor (diaminedinitroplatinum). The amount of the platinum supported was set to 0.2mg/cm² for the anode catalyst layer 12, 0.43mg/cm² for the cathode catalyst layer 14 when temporarily assuming that the platinum does not transfer into the electrolytic membrane 13. Then, as illustrated in Fig. 2, a fuel distribution plate 3 and an oxidant gas distribution plate 4 were assembled to both sides of the MEA 1 to form a cell A. Here, the fuel distribution plate 3 and the oxidant gas distribution plate 4 are serving as the gas distribution plate. The anode catalyst layer 12 and the cathode catalyst layer 14 are electrically connected through an electrically conductive path 80.

In the step of performing the electrochemical reductive reaction, moist hydrogen is supplied to the fuel distribution plate 3 provided at the anode side of the cell A. Further, moist nitrogen is supplied to the oxidant gas distribution plate 3 provided at the cathode side of the cell A. At the same time, an electrical load device 85 (manufactured by Kikusui Electronics Corp., PLZ-1003W) was connected to both electrodes of the cell A through the electrically conductive path 80 in series. Then, electric current of approximately 0.1 to 0.3 ampere was kept flowing at a constant current mode for 5 to 15 minutes. Thus, the catalyst positive ion as the catalyst precursor included in the cathode catalyst layer 14 was electrochemically reduced. As a result, platinum microparticles were precipitated and supported by the carbon black supporting-base (catalyst-supporting base) included in the cathode catalyst layer 14.

According to the step of performing the electrochemical reductive reaction, a catalyst metal particle layer 13k, which functions as the catalyst particle layer having a plurality of catalyst, was found in the polymer electrolytic membrane 13 through an electron probe microanalysis (EPMA). The reason,why the catalyst metal particle layer 13k exists in the polymer electrolytic membrane 13 can be assumed as follows; the catalyst precursor included in the cathode catalyst layer 14 transfers into the polymer electrolytic membrane 13 by diffusion or ion-exchange, and reduced. Thus, the catalyst precursor having been included in the cathode catalyst layer 14 is reduced to develop catalyst microparticles of small size (several nanometer size) not only in the cathode catalyst layer 14 but also in the polymer electrolytic membrane 13.

After that, hydrogen (utilization 85%) of atmospheric pressure was supplied to the anode, and air (utilization 40%) of atmospheric pressure was supplied to the cathode of the cell A according to the first example for generating electricity. In this time, moisture was added to the hydrogen gas at a dew point of 57 °C, and to the air at a dew point of 60 °C. The cell temperature at this time was 77 °C. Then, an open end voltage and current-voltage property was evaluated by means of an evaluation apparatus for a polymer electrolyte fuel cell.

Next, a comparative example will be explained. The comparative example is a method for manufacturing an MEA utilizing commercial Pt/C (carbon-supported platinum) manufactured by TANAKA KIKINZOKU KOGYO KK. For manufacturing an anode catalyst layer, carbon-supported platinum-ruthenium catalyst (manufactured by TANAKA KIKINZOKU KOGYO KK, TEC62E58) having platinum-ruthenium 57% by weight supported by electrically conductive carbon black (Ketjenblack EC) was utilized. The carbon-supported platinum-ruthenium catalyst, 5g, purified water, 18g, alcohol dispersion of a polymer electrolyte (manufactured by Asahi Kasei Corporation, Aciplex SS-1100), and isopropyl alcohol, 6g, were mixed. Then, the carbon-supported platinum-ruthenium catalyst was dispersed to have a second particle diameter of 0.5 µm to 1.0 µm. Thus, a catalyst paste was made. The catalyst paste was applied onto an ETFE film (manufactured by Asahi Glass Company, Aflex) by means of an applicator to be a thin film of a uniform thickness. The applied catalyst paste was dried at a temperature of 80°C. The dried catalyst paste was cut into pieces of the size of an electrode. Thus, an anode catalyst layer was made.

In addition, for making the cathode catalyst layer, carbon-supported platinum catalyst (manufactured by TANAKA KIKINZOKU KOGYO KK, TEC10E70TPM) having platinum 67% by weight supported by electrically conductive carbon black (Ketjenblack EC), 5g, purified water, 16g, alcohol dispersion of a polymer electrolyte (manufactured by Asahi Kasei Corporation, Aciplex SS-1100), 41g, and isopropyl alcohol, 5g, were mixed. The carbon-supported platinum catalyst was dispersed to have a second particle diameter of 0.5 µm to 1.0 µm. Thus, a catalyst paste was made. The catalyst paste was applied onto an ETFE film (manufactured by Asahi Glass Company, Aflex) by means of an applicator to be a thin film of a uniform thickness. The applied catalyst paste was dried at a temperature of 80 °C. The dried catalyst paste was cut into pieces of the size of an electrode. Thus, a cathode catalyst layer was made. Further, water-repellent gas diffusion material (manufactured by Toray Industries, Inc., Carbon Paper) was cut into pieces of an electrode size to make an anode gas diffusion layer and a cathode gas diffusion layer.

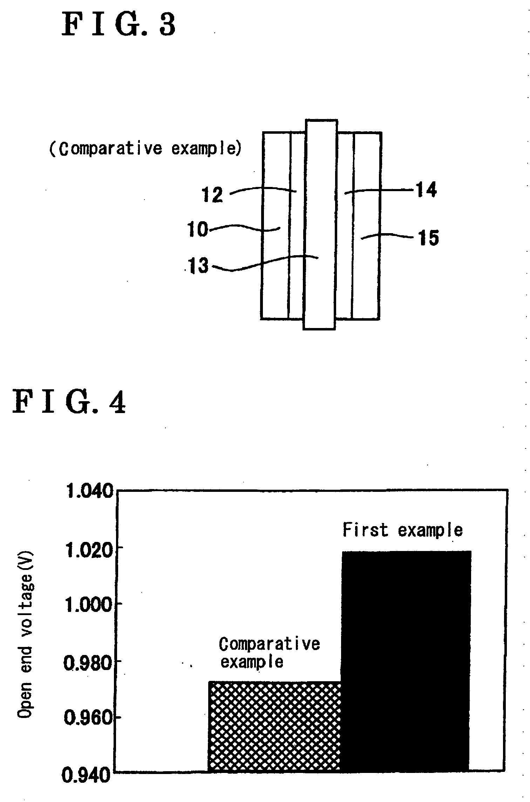

The anode catalyst layer formed on the ETFE film and the cathode catalyst layer formed on another ETFE film were respectively applied onto one side and the other side of the polymer electrolyte membrane 13. Therefore, an order of the layers is; the anode catalyst layer 12, the polymer electrolytic membrane 13, and the cathode catalyst layer 14 (please refer to Fig. 3). The polymer electrolytic membrane utilized was GORE-SELECT 30 manufactured by Japan Gore-Tex. Then, the layers were hot-pressed (thermal bonding) at a temperature of 150 °C, under a surface pressure of 1 MPa (10 kgf/cm²), during a retention time of 1 minute to make a MEA. Further, as illustrated in Fig. 3, the anode gas diffusion layer 10 and the cathode gas diffusion layer 15 were respectively applied onto one side and the other side of the MEA in a thickness direction. Then, the layers were hot-pressed (thermal bonding) at a temperature of 140 °C, under a surface pressure of 0.8 MPa (8 kgf/cm²), during a retention time of 3 minutes. The MEA manufactured as described above was utilized to make a cell B. According to calculations, the anode catalyst layer 12 includes 0.2 mg/cm² of platinum supported and the cathode catalyst layer 14 includes 0.45 mg/cm² of platinum in the cell B. Then, hydrogen (utilization 85%) of atmospheric pressure was supplied to the anode of the cell B, and air (utilization 40%) of atmospheric pressure was supplied to the cathode of the cell B for generating electricity by the cell B. Then, an open end voltage of the cell B was measured. Further, relations between a current and a cell voltage were investigated. Moisture was added to the hydrogen gas at a dew point of 57 °C, and to the air at a dew point of 60 °C. The cell temperature at this time was 77 °C.

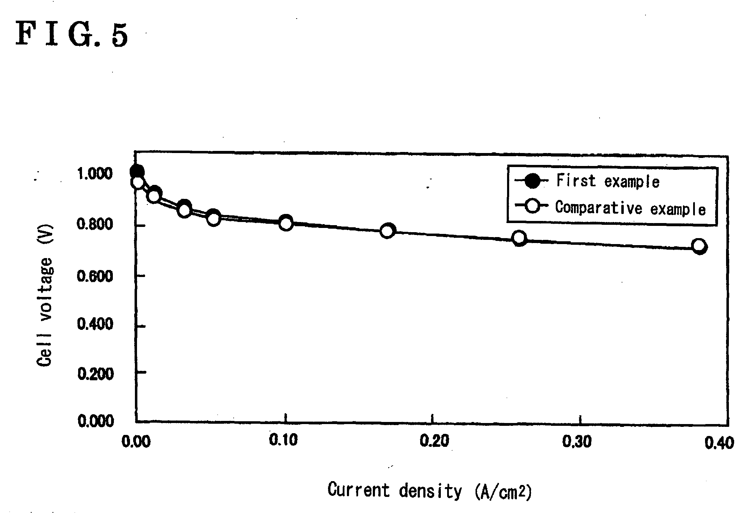

In following, investigation results will be explained. Investigation results of measuring an open end voltage is illustrated in Fig. 4. Investigation results of current-voltage property evaluation are illustrated in Fig. 5. Vertical axis of Fig. 4 represents an open end voltage. Although the amount of platinum supported in the MEA according to the first example is almost the same as that supported in the MEA according to the comparative example, as can be seen from the results illustrated in Fig. 4, the cell A according to the first example exhibited an open end voltage higher than that of the cell B according to the comparative example by 40 to 50mV. It can be assumed as follows; a catalyst metal particle layer 13k exists in the polymer electrolytic membrane 13 of the cell A according to the first example, and the catalyst metal particle layer 13k inhibits a crossover of gases. In addition, a horizontal axis in Fig. 5 represents a current density. A vertical axis in Fig. 5 represents a cell voltage. The first example is indicated by painted circles, and the comparative example is indicated by blank circles. According to the first example, although some catalyst has been transferred into the polymer electrolytic membrane from the cathode catalyst layer 14, the cell A according to the first example still has a cell performance of same level as in the cell according to the comparative example, as illustrated in Fig. 5.

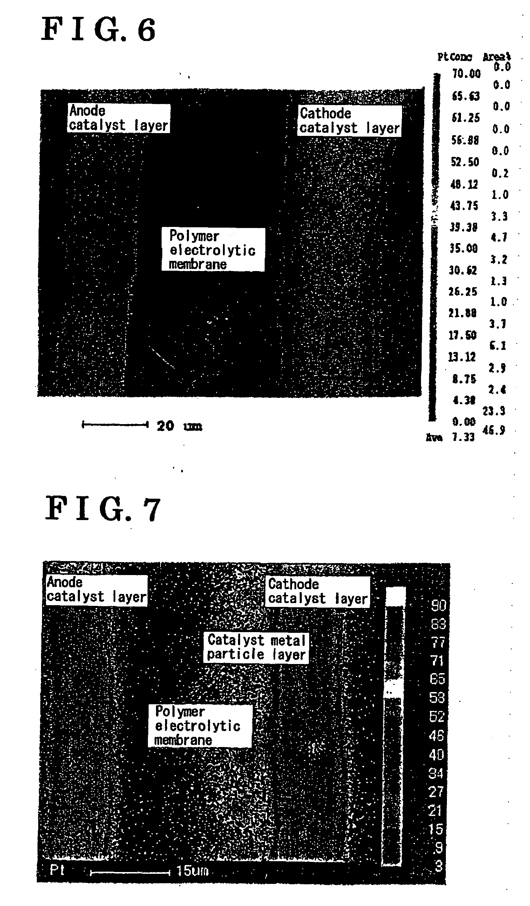

Fig. 6 represents results of analysis for platinum-mapping of the MEA according to the comparative example analyzed by means of an electron probe microanalysis (EPMA). Fig. 7 represents results of analysis for platinum-mapping of the MEA according to the first example analyzed by means of an EPMA. According to the results of the MEA according to the comparative example, as illustrated in Fig. 6, a catalyst metal microparticle layer did not exist in the polymer electrolytic membrane. On the contrary, according to the results of the MEA according to the first example, as illustrated in Fig. 7, a catalyst metal particle layer 13k having groups of catalyst microparticles existing in the polymer electrolytic membrane 13 was found. In particular, according to Fig. 7, it was found that the catalyst metal particle layer 13k exist in the polymer electrolytic membrane 13 near the cathode catalyst layer 14. As illustrated in Fig. 7, concentration of catalyst in the cathode catalyst layer 14 side of the catalyst metal particle layer 13k is higher than that in the anode catalyst layer 12 side of the catalyst metal particle layer 13k. When a thickness of the catalyst metal particle layer 13k is not clear, various rules for measuring the thickness of the catalyst metal particle layer 13k can be utilized. For example, when 20% or more of plots (indicated in the platinum-mapping analyzed by the EPMA) relative to total number of plots depicted along a line drawn in the polymer electrolytic membrane 13 parallel to a center line drawn in the polymer electrolytic membrane 13 indicate 3% or more of a catalyst concentration, the line can be assumed to be an edge of the catalyst metal particle layer 13k.

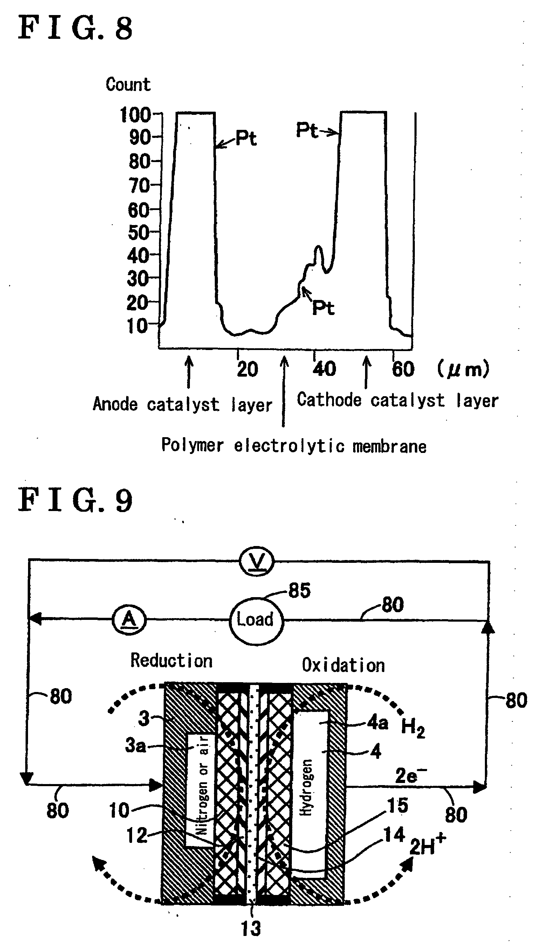

According to Fig. 7, a relative average thickness of the catalyst metal particle layer 13k becomes to approximately 30 to 60, 40 to 50 assuming that an average thickness of the polymer electrolytic membrane 13 is 100. Thus, the catalyst metal particle layer 13k formed in the polymer electrolytic membrane 13 is not a linear shape, but a broad shape. It is advantageous for increasing a contact probability between a gas which has been transferred into the polymer electrolytic membrane and the catalyst existing in the catalyst metal particle layer 13k that the catalyst metal particle layer 13k is not a linear shape, but a broad shape. Therefore, the crossover can be inhibited. Fig. 8 represents a reproduction of results of a line analysis of the EPMA. Horizontal axis in Fig. 8 represents a length in a thickness direction of the MEA measured from a certain origin. Positions of the anode catalyst layer, the polymer electrolytic membrane, and the cathode catalyst layer are also illustrated. Pt indicates platinum. As can be seen and found from Fig. 8, platinum distributes in the polymer electrolytic membrane in a considerable extent of width.

In following, a second example according to the embodiment of the present invention will be explained. Fig. 9 represents a method for supporting a catalyst according to the second example. The second example includes basically the similar configuration, action and effect as in the first example. According to the second example, as illustrated in Fig. 9, the cathode of the fuel cell is processed by an oxidative reaction, and the anode of the fuel cell is processed by a reductive reaction. The MEA illustrated in Fig. 9 is formed by arranging the anode gas diffusion layer 10, the anode catalyst layer 12, the polymer electrolytic membrane 13, the cathode catalyst layer 14, and the cathode gas diffusion layer 15 in a thickness direction in an order described above. The polymer electrolytic membrane 13 does not include bonded structure of plural polymer electrolytic membranes. The polymer electrolytic membrane 13 includes one sheet of polymer electrolytic membrane. According to the MEA, the anode catalyst layer 12 includes the catalyst precursor (diaminedinitroplatinum), and the cathode catalyst layer 14 includes the catalyst (platinum). When temporarily assuming that the platinum does not transfer into the polymer electrolytic membrane 13, the amount of platinum supported in the anode catalyst layer 12 becomes 0.2 mg/cm², supported in the catalyst layer 14 becomes 0.43 mg/cm².

Then, as illustrated in Fig. 9, a fuel distribution plate 3 and an oxidant gas distribution plate 4 were respectively assembled to one side and the other side of the MEA to configure a cell. The anode and the cathode were electrically connected through an electrically conductive path 80. For performing the step of performing the electrochemical reductive reaction, both electrodes of the cell were electrically connected through the electric load device 85 (manufactured by Kikusui Electronics Corp., PLZ-1003W) in series with the electrically conductive path 80. Then, moist hydrogen was supplied to the oxidant gas distribution plate 4 provided at the cathode, and moist' nitrogen was supplied to the fuel distribution plate 3 provided at the anode. Then, current was kept flowing at a constant current mode through the electrically conductive path 80 in the same way as in the first example. Also in this example, the catalyst precursor (diaminedinitroplatinum) included in the anode catalyst layer 12 was electrochemically reduced, and platinum microparticles were precipitated and supported on the carbon black supporting base (catalyst-supporting base). Also in this example, as same as in the first example, the catalyst metal microparticle layer 13k having groups of plural catalyst microparticles was developed in the polymer electrolytic membrane 13.

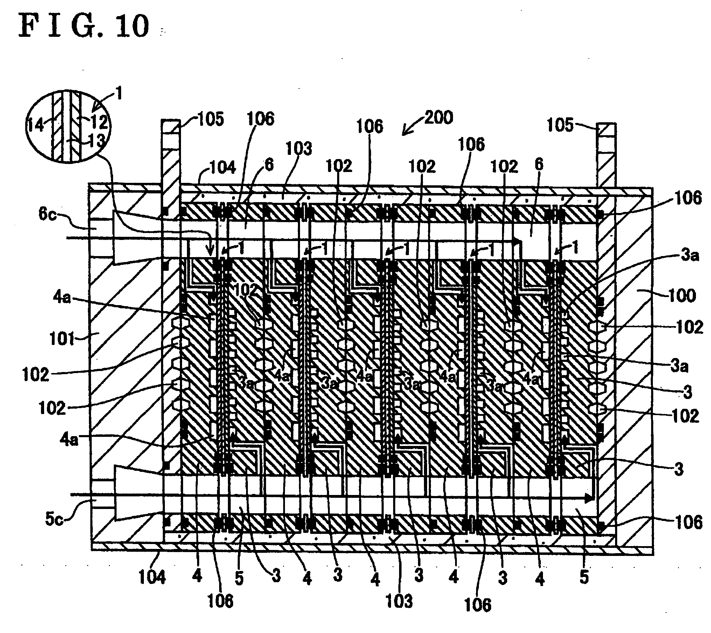

A third example according to the embodiment of the present invention will be explained. Fig. 10 represents a diagram illustrating a schematic configurative view of a fuel cell stack according to the third example. The third example basically has similar configuration, action and effect as in the first example. In the third example, the step of performing an electrochemical reductive reaction is simultaneously performed for a whole fuel cell stack 200. As illustrated in Fig. 10, plural MEAs and fuel distribution plates 3 and oxidant gas distribution plates 4 are assembled to configure the fuel cell stack 200. The fuel distribution plate 3 and the oxidant distribution plate 4 are serving as a gas distribution member. The fuel cell stack 200 includes a fuel path 5 for distributing a fuel gas to a fuel channel 3a of the fuel distribution plate 3 and an oxidant gas path 6 for distributing air as an oxidant gas to an oxidant gas channel 4a. Before the step of performing the electrochemical reductive reaction, the catalyst (platinum-ruthenium or platinum) is included in the anode catalyst layer 12, and the catalyst precursor (diaminedinitroplatinum) is included in the cathode catalyst layer 14. The anode catalyst layer 12 of the anode and the cathode catalyst layer 22 of the cathode are electrically connected through an electrically conductive path (not illustrated). The polymer electrolytic membrane 13 does not include bonded structure of plural polymer electrolytic membranes. The polymer electrolytic membrane 13 is configured from a sheet of a polymer electrolytic membrane 13.

Then, in the step of performing the electrochemical reductive reaction, hydrogen gas is supplied to the fuel channel 3a of the fuel distribution plate 3, and nitrogen gas is supplied to the oxidant gas channel 4a of the oxidant gas distribution plate 4. The hydrogen gas is supplied to the anode catalyst layer 12 through the fuel channel 3a of the fuel distribution plate 3 and the anode gas diffusion plate 10. The hydrogen gas supplied to the anode catalyst layer 12 is separated into protons (H⁺) and electrons (e⁻) through the catalyst (platinum-ruthenium or platinum) included in the anode catalyst layer 12 by an oxidative reaction. The electron (e⁻) transfers to the cathode through the electrically conductive path, and is consumed for the reductive reaction performed at the cathode catalyst layer 14 to reduce the catalyst precursor (diaminedinitroplatinum) included in the cathode catalyst layer 14. Thus, the catalyst is produced and supported by the cathode catalyst layer 14. The reductive process of the catalyst precursor is performed for the whole fuel cell stack 200. Therefore, the step of performing the electrochemical reductive reaction need not be performed for a MEA one by one, and can be performed for the whole fuel cell stack 200 simultaneously. Accordingly, productivity of the step of performing the electrochemical reductive reaction can be largely improved. According to the example of the present invention, as described above, the catalyst precursor included in plural cathode catalyst layers 14 of plural MEAs configuring the fuel cell stack 200 can be simultaneously reduced, which is advantageous for decreasing a manufacturing cost. Further, the catalyst precursor included in the plural cathode catalyst layers 14 can be simultaneously reduced, which is advantageous for making quality of the catalyst included in the plural cathode catalyst layers 14 uniform and thereby contributes to improve performance of generating electricity.

In addition, in Fig. 10, 100 indicates an end plate, 101 indicates a manifold, 102 indicates a cooling water path for running a cooling water for cooling the fuel cell stack 200, 103 indicates an insulator, 104 indicates a tension plate, 105 indicates a terminal, and 106 indicates a seal member. The manifold 101 includes an inlet 5c for letting the fuel gas into the fuel path 5 and an inlet 6c for letting the oxidant gas (generally air) into the oxidant gas path 6. Because the temperature of the fuel cell stack 200 can be controlled by controlling the temperature of water (fluid) running in the cooling water path 102, the temperature condition of the electrochemical reductive reaction, in which the catalyst precipitates, can be controlled. Accordingly, when the temperature of the water (fluid) running in the cooling water path 102 of the fuel cell stack 200 is set higher, the temperature of the fuel cell stack can be set higher. Therefore, the temperature condition of the electrochemical reductive reaction, in which the catalyst precipitates, can be set higher, which is advantageous for shortening a process time of the electrochemical reductive reaction.

According to an aspect of the present invention, the catalyst particle layer developed in the polymer electrolytic membrane described above can reduce a crossover of gases. Accordingly, a method for supporting a catalyst for a polymer electrolyte fuel cell, and a membrane electrode assembly, in which performance and durability of the membrane electrode assembly is largely improved, can be provided.

The present invention can be utilized for a polymer electrolyte fuel cell utilized for a vehicle, for a system for stationing, for an electric device, for an electronic device or the like.

A method for supporting a catalyst for a polymer electrolyte fuel cell is characterized in that the method for supporting a catalyst includes the steps of making a catalyst layer (12, 14) including a catalyst precursor, the catalyst layer to be used as either an anode catalyst layer (12) or a cathode catalyst layer (14), arranging the catalyst layer with a polymer electrolytic membrane (13) having proton conductivity in a thickness direction, and performing an electrochemical reductive reaction for reducing the catalyst precursor included in the catalyst layer to produce a catalyst and concomitantly developing a catalyst particle layer (13k) having a plurality of catalyst microparticles in the polymer electrolytic membrane.

## Claims

1. A method for supporting a catalyst for a polymer electrolyte fuel cell **characterized in that**
the method for supporting a catalyst includes the steps of making a catalyst layer (12, 14) including a catalyst precursor, the catalyst layer to be used as either an anode catalyst layer (12) or a cathode catalyst layer (14), arranging the catalyst layer with a polymer electrolytic membrane (13) having proton conductivity in a thickness direction, and performing an electrochemical reductive reaction for reducing the catalyst precursor included in the catalyst layer to produce a catalyst and concomitantly developing a catalyst particle layer (13k) having a plurality of catalyst microparticles in the polymer electrolytic membrane.

2. The method for supporting a catalyst for a polymer electrolyte fuel cell according to claim 1, wherein
an average thickness of the catalyst particle layer relative to a thickness of the polymer electrolytic membrane is 30 to 60 assuming that the thickness of the polymer electrolytic membrane is 100.

3. A method for supporting a catalyst for a polymer electrolyte fuel cell **characterized in that**
the method for supporting a catalyst includes the steps of arranging an anode gas diffusion layer (10), an anode catalyst layer (12), a polymer electrolytic membrane (13) having proton conductivity, a cathode catalyst layer (14), and a cathode gas diffusion layer (15) in a thickness direction in an order described above to make a membrane electrode assembly (1), one of the anode catalyst layer and the cathode catalyst layer including a catalyst, the other of the anode catalyst layer and the cathode catalyst layer including a catalyst precursor, and electrically connecting the anode catalyst layer and the cathode catalyst layer included in the membrane electrode assembly through an electrically conductive path (80), and performing an electrochemical reductive reaction for the other of the anode catalyst layer and the cathode catalyst layer for reducing the catalyst precursor included in the other of the anode catalyst layer and the cathode catalyst layer to produce the catalyst on the basis of electrons produced in an electrochemical oxidative reaction performed for the one of the anode catalyst layer and the cathode catalyst layer and concomitantly developing a catalyst particle layer (13k) having a plurality of catalyst microparticles in the polymer electrolytic membrane.

4. The method for supporting a catalyst for a polymer electrolyte fuel cell according to claim 3, wherein
before the step of performing the electrochemical reductive reaction, the anode catalyst includes the catalyst and the cathode catalyst layer includes the catalyst precursor, and in the step of performing the electrochemical reductive reaction, the electrochemical oxidative reaction is performed at the anode catalyst layer, the electrochemical reductive reaction is performed at the cathode catalyst layer for reducing the catalyst precursor included in the cathode catalyst layer to produce the catalyst and concomitantly developing the catalyst particle layer in the polymer electrolytic membrane near the cathode catalyst layer.

5. The method for supporting a catalyst for a polymer electrolyte fuel cell according to either one of claims 3 and 4, wherein
in the step of performing the electrochemical reductive reaction, hydrogen gas or a hydrogen-containing gas is supplied to the one of the anode catalyst layer and the cathode catalyst layer.

6. The method for supporting a catalyst for a polymer electrolyte fuel cell according to any one of claims 3 to 5, wherein
in the step of performing the electrochemical reductive reaction, any one of an inertia gas, a gas mainly including an inertia gas, and air is supplied to the other of the anode catalyst layer and the cathode catalyst layer.

7. The method for supporting a catalyst for a polymer electrolyte fuel cell according to any one of claims 3 to 6, wherein
an average thickness of the catalyst particle layer relative to a thickness of the polymer electrolytic membrane is 30 to 60 assuming that the thickness of the polymer electrolytic membrane is 100.

8. A method for supporting a catalyst for a polymer electrolyte fuel cell according to either one of claims 1 and 2, wherein
a fuel cell stack (200) is formed by assembling a plurality of membrane electrode assemblies, formed by arranging an anode gas diffusion layer (10), the anode catalyst layer (12), the polymer electrolytic membrane (13), the cathode catalyst layer (14), and a cathode gas diffusion layer (14) in a thickness direction in an order described above, with a gas distribution member (3, 4), and the step of performing the electrochemical reductive reaction is performed for the whole fuel cell stack, or according to any one of claims 3 to 7, wherein
a fuel cell stack (200) is formed by assembling a plurality of membrane electrode assemblies with a gas distribution member (3, 4), and the step of performing the electrochemical reductive reaction is performed for the whole fuel cell stack.

9. A membrane electrode assembly formed by arranging an anode gas diffusion layer, an anode catalyst layer, a polymer electrolyte membrane, a cathode catalyst layer, and a cathode gas diffusion layer in a thickness direction in an order described above
**characterized in that**
the anode catalyst layer and the cathode catalyst layer include a catalyst, and the polymer electrolyte membrane includes a catalyst particle layer including groups of catalyst microparticles.

10. The membrane electrode assembly according to claim 9, wherein
an average thickness of the catalyst particle layer relative to a thickness of the polymer electrolytic membrane is 30 to 60 assuming that the thickness of the polymer electrolytic membrane is 100.
